# EUROPÄISCHE PATENTSCHRIFT

(11) **EP 2 112 103 B1**
(45) Veröffentlichungstag und Bekanntmachung des Hinweises auf die Patenterteilung: **08.06.2011**
(21) Anmeldenummer: 09004934.7
(22) Anmeldetag: 03.04.2009
(51) Int. Cl.: B65G 69/18

(54) **Verfahren und Vorrichtung zur kontaminationsfreien Überführung von fließfähigem Schüttgut**
Method and device for transferring fluid bulk material without contamination
Procédé et dispositif de transfert sans contamination de marchandises au détail pouvant s'écouler

(30) Priorität: 22.04.2008 DE 102008020218
(43) Veröffentlichungstag der Anmeldung: 28.10.2009
(73) Patentinhaber: AZO Holding GmbH, 74706 Osterburken (DE)
(72) Erfinder: Bauer, Helmuth, 74722 Buchen (DE); Leist, Christian, 74707 Osterburken (DE)
(74) Vertreter: Lenz, Steffen

(56) Entgegenhaltungen:
- EP-A- 0 504 054
- EP-A- 1 243 535
- EP-A- 1 550 833
- WO-A-01/53176
- DE-C1- 4 410 173

## Beschreibung

Die Erfindung betrifft ein Verfahren zur im wesentlichen kontaminationsfreien Überführung von fließfähigem Schüttgut aus einer Dosiereinheit mit einer verschließbaren Dosieröffnung in einen Behälter mit einer verschließbaren Aufnahmeöffnung, indem die Dosieröffnung der Dosiereinheit mit der Aufnahmeöffnung des Behälters lösbar verbunden wird, die Dosieröffnung und die Aufnahmeöffnung geöffnet werden und das Schüttgut von der Dosiereinheit über deren Dosieröffnung und über die Aufnahmeöffnung des Behälters in diesen überführt wird. Die Erfindung betrifft ferner eine zur Durchführung eines solchen Verfahrens geeignete Vorrichtung zur im wesentlichen kontaminationsfreien Überführung von fließfähigem Schüttgut, mit einer Dosiereinheit mit einer verschließbaren Dosieröffnung und mit einem Behälter mit einer verschließbaren Aufnahmeöffnung, wobei die Dosieröffnung der Dosiereinheit mit der Aufnahmeöffnung des Behälters lösbar verbindbar ist. Schließlich betrifft die Erfindung eine Anlage zum im wesentlichen kontaminationsfreien, gravimetrischen Zusammenführen einzelner Schüttgutkomponenten aus mehreren Vorratsbehältern mit je einer Dosiereinheit mit einer verschließbaren Dosieröffnung in einen Behälter mit einer verschließbaren Aufnahmeöffnung, wobei den Vorratsbehältern je eine Wiegeeinrichtung zugeordnet ist, welche mit dem Behälter zumindest während des Dosierens von Schüttgut aus dem jeweiligen Vorratsbehälter zusammenwirkt, wobei der Behälter unterhalb der Dosiereinheiten der Vorratsbehälter verfahrbar und je nach gewünschter Mischungszusammensetzung nacheinander mit den Dosiereinheiten der entsprechenden Vorratsbehälter lösbar verbindbar ist.

Bei der Dosierung von fließ- oder rieselfähigen, vornehmlich partikelförmigen Schüttgütern, insbesondere bei der Herstellung vom Mischungen aus unterschiedlichen Schüttgütern solcher Art gemäß einer gewünschten Zusammensetzung, ist es häufig erwünscht, daß das jeweilige Schüttgut während des Dosiervorgangs nicht mit der Umgebung in Kontakt tritt, um Kontaminationen des Schüttgutes von außen zu vermeiden, aber auch - z.B. im Falle gesundheitlich bedenklicher Schüttgüter - eine Kontamination der Umgebung zuverlässig zu verhindern. Dies gilt insbesondere für Produkte mit erhöhten Anforderungen an Hygiene und Reinheit, wie Lebensmittel, Arzneimittel und dergleichen. Darüber hinaus muß im Falle einer Herstellung von Mischungen aus solchen - verschiedenartigen - Schüttgütern, welche z.B. in getrennten Vorratsbehältern bevorratet sind und entsprechend der gewünschten Rezeptur einem Mischbehälter zugeführt werden sollen, sichergestellt sein, daß weder die Dosieröffnung der jeweiligen Dosiereinheit (z.B. der Dosiereinheit eines jeden Vorratsbehälters) noch die Aufnahmeöffnung des Behälters, in welchem die Schüttgutkomponenten zusammengeführt werden sollen, mit fremdem Schüttgut verunreinigt werden.

Um Verunreinigungen des Schüttgutes bei der Überführung von der Dosiereinheit an den Behälter sowie eine Verunreinigung der Umgebung mit dem Schüttgut zu verhindern, ist es bekannt, die jeweiligen Dosier- bzw. Aufnahmeöffnungen mittels Schiebern zu verschließen, was jedoch ein häufiges Reinigen solcher Schieber erfordert, wenn sichergestellt werden muß, daß nicht an den Schiebern anhaftende Schüttgutreste verschleppt werden. Darüber hinaus sind verschiedenartige weitere Verschlußorgane der Dosier- bzw. Aufnahmeöffnungen bekannt, z.B. in Form von teilbaren Klappen (EP 1 315 662 A1) oder mehr oder minder kegelförmigen Stopfen (EP 0 968 937 A1). Ein Nachteil solcher Verschlußorgane besteht einerseits in deren komplexem Aufbau, was zu einem hohen Aufwand führt. Dies gilt insbesondere für die Verschlußklappen gemäß der vorgenannten EP 1 315 662 A1. Andererseits führen solche Verschlußorgane, wie auch die Stopfen nach der oben erwähnten EP 0 968 937 A1, zwangsweise zu einer Übertragung von Dichtkräften zwischen der Dosiereinheit und dem zu befüllenden Behälter, so daß eine gravimetrische Dosierung und insbesondere eine gravimetrische Erfassung des dem Behälter während des Dosiervorgangs zugesetzten Schüttgutes nur sehr schwer bzw. praktisch gar nicht möglich ist.

Die DE 603 10 369 T2 beschreibt eine Vorrichtung zum möglichst kontaminationsfreien Überführen von Schüttgut aus einem mit einem Dosierorgan ausgestatteten oberen Behälter in einen unterhalb desselben angeordneten Behälter, wobei der obere Behälter an den unteren Behälter angedockt werden kenn. Eine gravimetrische Dosierung und insbesondere eine gravimetrische Erfassung des dem unteren Behälter während des Dosiervorgangs zugesetzten Schüttgutes ist auch bei der aus dieser Druckschrift bekannten Vorrichtung nicht möglich. Entsprechendes gilt für eine ähnliche Vorrichtung gemäß der EP 0 547 861 A1 sowie für eine aus der DE 295 03 812 Ul bekannte Vorrichtung zur möglichst kontaminationsfreien Überführung von Schüttgut, deren Dosierorgan mittels einer Manschette mit der Öffnung eines Aufnahmebehälters verbunden werden kann.

Die DE 10 2005 014 930 A1 beschreibt eine Anlage zum gravimetrischen Zusammenführen einzelner Schüttgutkomponenten aus mehreren Vorratsbehältern mit je einer Dosiereinheit in einen Transportbehälter, welcher zwischen den Vorratsbehältern verfahren wird und dem die Schüttgutkomponenten aus den jeweiligen Vorratsbehältern entsprechend der gewünschten Rezeptur zugesetzt werden. Die Erfassung der jeweils dosierten Menge an Schüttgut erfolgt gravimetrisch mittels mehrerer Wiegeeinrichtungen in Form von Behälterwaagen, welche unterhalb des jeweiligen Vorratsbehälters angeordnet sind und auf welche der Transportbehälter mittels einer Hubeinrichtung aufgesetzt wird. Beim Dosiervorgang wird der auf der Wiegeeinrichtung befindliche Transportbehälter mittels der Hubeinrichtungen der Wiegeeinrichtung auf ein Niveau angehoben, auf welchem seine Aufnahmeöffnung mit der Dosieröffnung des darüber angeordneten Vorratsbehälters verbunden werden kann, wonach die zu dosierende Schüttgutkomponente so lange zugesetzt wird, bis die Wiegeeinrichtung das gewünschte Gewicht sensiert wird. Anschließend wird der Behälter wieder nach unten abgesenkt, wobei seine Aufnahmeöffnung von der Dosieröffnung entkoppelt wird, und wird der Behälter an den nächsten Vorratsbehälter oder in Richtung einer Entleerstelle weitertransportiert.

Die EP 1550 833A offenbart ein Verfahren sowie eine Vorrichtung zur im wesentlichen kontaminationsfreien Überfuhrung von Hießfähigen Schüttgut gemäß dem Oberbegriff der Ansprüche 1 und 7. Obgleich sich diese Vorgehensweise in der Praxis bewährt hat, verursachen die Hubeinrichtungen der eingesetzten Wiegeeinrichtungen, welche den gesamten Behälter zwischen einer oberen Andockposition an die Dosiereinheit eines jeden Vorratsbehälters und einer unteren Transportposition verlagern müssen, einen nicht unerheblichen Kostenaufwand, welcher aus Dimensionierungsgründen um so größer ist, je größer und schwerer der Behälter ausgebildet ist.

Der Erfindung liegt die Aufgabe zugrunde, ein Verfahren und eine Vorrichtung der eingangs genannten Art unter weitestgehender Vermeidung der vorgenannten Nachteile dahingehend weiterzubilden, daß ein im wesentlichen kontaminationsfreies Überführen des Schüttgutes von der Dosiereinheit in den Behälter unter gravimetrischer Erfassung der jeweils dosierten Schüttgutmenge möglich ist, welche gegenüber dem Stand der Technik sowohl in konstruktiver Hinsicht einfacher als auch kostengünstigerer Weise vonstatten gehen kann.

In verfahrenstechnischer Hinsicht wird diese Aufgabe mit einem Verfahren gemäß Anspruch 1 gelöst.

In vorrichtungstechnischer Hinsicht wird diese Aufgabe mit einer Vorrichtung gemäß Anspruch 7 gelöst.

Die Erfindung macht es möglich, daß der auch als "Andocken" bezeichnete Vorgang des Verbindens der Dosiereinheit und des Behälter - oder genauer: der Dosieröffnung mit der Aufnahmeöffnung - nicht zur Übertragung von Kräften, insbesondere solchen mit vertikaler, d.h. in Richtung der Gravitationskraft gerichteter Wirkungskomponente, zwischen der Dosiereinheit und dem Behälter führt, da das nachgiebige Verbindungselement aufgrund seiner Nachgiebigkeit derartige Kräfte nicht zu übertragen vermag, wenn es in eine solche Relativposition in Bezug auf die Dosiereinheit bzw. auf den Behälter verbracht worden ist, daß es die Dosieröffnung mit der Dosiereinheit und/oder die Aufnahmeöffnung mit dem Behälter in der Dosierposition ausschließlich verbindet. Auf diese Weise ist eine einfache gravimetrische Erfassung der Masse des dosierten Schüttgutes möglich, indem der Behälter gewogen wird, was insbesondere auch kontinuierlich während des Dosiervorgangs geschehen kann. Zugleich verhindert das nachgiebige Verbindungselement, welches z.B. im Form eines ring- oder wendelgewellten Balges aus Metall, Kunststoff etc., eines beispielsweise im wesentlichen in Form der Mantelfläche eines Zylinders, eines Kegelstumpfes oder eines Pyramidenstumpfes ausgestalteten Schlauches aus Folie, Textil oder dergleichen gefertigt sein kann, jeglichen Kontakt des Schüttgutes mit der Umgebung. Mit "im wesentlichen kontaminationsfrei" ist im Sinne der vorliegenden Offenbarung im übrigen eine zumindest gegenüber einer offenen Dosierung ohne Andocken der Dosieröffnung einer Dosiereinheit an eine Aufnahmeöffnung eines Aufnahmebehälters verminderte Kontaminationsgefahr sowohl der Umgebung durch die dosierten Stoffe als auch der dosierten Stoffe selbst durch Umgebungseinflüsse angesprochen. Dem Fachmann ist dabei bewußt, daß eine 100%-ige Kontaminationsfreiheit je nach Beschaffenheit der dosierten Stoffe in der Praxis grundsätzlich nur bedingt möglich ist.

Eine bevorzugte Ausführung des erfindungsgemäßen Verfahrens sieht vor, daß
- die Dosieröffnung an einem im wesentlichen senkrecht zur Dosieröffnung verlagerbaren Träger angeordnet und der Träger mit der Dosiereinheit über das nachgiebige Verbindungselement verbunden wird, und/oder
- die Aufnahmeöffnung an einem im wesentlichen senkrecht zur Aufnahmeöffnung verlagerbaren Träger angeordnet und der Träger mit dem Behälter über das nachgiebige Verbindungselement verbunden wird,
wobei der Träger zumindest während des Dosiervorgangs in eine Relativposition in Bezug auf die Dosiereinheit und/oder auf den Behälter verbracht wird, in welcher der Träger ausschließlich über das nachgiebige Verbindungselement mit der Dosiereinheit und/oder mit dem Behälter in Kontakt steht. Eine entsprechende Vorrichtung zeichnet sich folglich dadurch aus, daß
- die Dosieröffnung an einem im wesentlichen senkrecht zur Dosieröffnung verlagerbaren Träger angeordnet und der Träger mit der Dosiereinheit über das nachgiebige Verbindungselement verbunden ist, und/oder
- die Aufnahmeöffnung an einem im wesentlichen senkrecht zur Aufnahmeöffnung verlagerbaren Träger angeordnet und der Träger mit dem Behälter über das nachgiebige Verbindungselement verbunden ist,
wobei der Träger in eine Relativposition in Bezug auf die Dosiereinheit und/oder auf den Behälter bringbar ist, in welcher der Träger ausschließlich über das nachgiebige Verbindungselement mit der Dosiereinheit und/oder mit dem Behälter in Kontakt steht. So Kann beispielsweise der Träger mit der Dosier-/Aufnahmeöffnung in einer Ruheposition mit der Dosiereinheit/dem Behälter in Kontakt stehen, z.B. hierauf aufliegen, hieran lösbar verrastet etc. sein, wobei er anläßlich des Dosierens von der Dosiereinheit/dem Behälter fort verlagert wird, so daß zusätzlich zu dem nachgiebigen Verbindungselement kein Kontakt mehr zwischen dem Träger und der Dosiereinheit/dem Behälter gegeben ist.

Um für eine konstruktiv einfache Ausgestaltung der Vorrichtung zu sorgen, kann es zweckmäßig sein, wenn nur entweder die Aufnahmeöffnung des Behälters oder die Dosieröffnung der Dosiereinheit mittels des nachgiebigen Verbindungselementes an dem Behälter oder an der Dosiereinheit angeordnet ist, während die Dosieröffnung oder die Aufnahmeöffnung starr an der Dosiereinheit oder an dem Behälter angeordnet ist. Erfolgt die Dosierung unter Einwirkung der Schwerkraft, d.h. ist die Dosiereinheit oberhalb des Behälters angeordnet und fällt das Schüttgut von dort in den Behälter hinein, so hat es sich ferner als günstig erwiesen, wenn die Aufnahmeöffnung des Behälters über das nachgiebige Verbindungselement an dem Behälter angeordnet ist, so daß es z.B. möglich ist, daß der Träger mit der über das nachgiebige Verbindungselement mit dem Behälter verbundenen Aufnahmeöffnung auf dem Behälter aufliegt und bedarfsweise auf ein Niveau anhebbar ist, auf welchem der Träger ausschließlich über das nachgiebige Verbindungselement mit der Aufnahmeöffnung in Kontakt steht.

Gemäß einer bevorzugten Ausgestaltung des erfindungsgemäßen Verfahrens kann vorgesehen, daß die Dosieröffnung und die Aufnahmeöffnung gemeinsam geöffnet werden, wobei insbesondere ein Verschlußorgan der Dosieröffnung mit einem Verschlußorgan der Aufnahmeöffnung gekoppelt und die Verschlußorgane gemeinsam in eine Öffnungsposition verbracht werden können. Ein Verschlußorgan der Dosieröffnung der erfindungsgemäßen Vorrichtung ist in diesem Fall folglich mit einem Verschlußorgan der Aufnahmeöffnung koppelbar, wobei die Verschlußorgane - insbesondere nach Kopplung derselben - gemeinsam in eine Öffnungsposition bringbar sind, um für einen Durchlaß des Schüttgutes von der Dosiereinheit in den Behälter zu sorgen. Die Verschlußorgane können dabei vorzugsweise im wesentlichen in Form von senkrecht zu der Aufnahmeöffnung und/oder zu der Dosieröffnung verlagerbaren Stempeln gebildet sind, wobei ihre miteinander koppelbaren Außenflächen bevorzugt im wesentlichen deckungsgleich sind, um ein jegliches Anhaften von Schüttgut hieran zu verhindern.

In Weiterbildung des erfindungsgemäßen Verfahrens kann vorgesehen sein, daß zumindest während des Dosiervorgangs ein Druckausgleich zwischen dem Innern der Dosiereinheit und/oder des Behälters und der Umgebung hergestellt wird, so daß Aspirationsluftströme, wie sie im Stande der Technik in der Regel durch Erzeugung eines inneren Unterdruckes gegenüber der Umgebung, z.B. durch aktives Absaugen von Luft, erzeugt werden, um einen Austritt von Schüttgut-Feinpartikel durch zwischen Dosiereinheit und Behälter gebildete Spalte zu verhindern, entbehrlich sind. Eine solche Unterdruckerzeugung, wie sei erfindungsgemäß durch die staubdichte Verbindung zwischen Dosiereinheit und Behälter entbehrlich ist, kann zu einer Absaugung nicht unerheblicher Mengen an Schüttgut-Feinpartikeln und somit zu einem Produktverlust führen und erfordert zudem einen zusätzlichen Energie- und Reinigungsaufwand. Ein derartiger Druckausgleich kann beispielsweise mittels eines Filterelementes hergestellt werden, wobei insbesondere ein nachgiebiges Verbindungselement eingesetzt werden kann, welches zumindest teilweise aus Filtermaterial, wie Filtergewebe oder dergleichen, gefertigt ist. Folglich kann in vorteilhafter Ausgestaltung vorgesehen sein, daß die Vorrichtung ferner ein Druckausgleichselement umfaßt, welches zum Druckausgleich zwischen dem Innern der Dosiereinheit und/oder des Behälters und der Umgebung ausgebildet ist, wobei das Druckausgleichselement insbesondere von einem Filterelement gebildet sein kann. Während ein solches Druckausgleichs-oder Filterelement selbstverständlich auch unmittelbar an dem Behälter und/oder an der Dosiereinheit, vorzugsweise im Bereich der jeweiligen Aufnahme- bzw. Dosieröffnung, angeordnet sein kann, z.B. in Form einer mit dem Druckausgleichs- oder Filterelement bestückten Gehäuseaussparung bzw. einem mit einem Ventil ausgestatteten Auslaß an die Umgebung oder dergleichen, kann insbesondere auch das Druckausgleichselement selbst von dem zumindest teilweise aus Filtermaterial gefertigten, nachgiebigen Verbindungselement gebildet sein.

Erfindungsgemäß wird der Behälter während des Dosiervorgangs gewogen , wobei die Dosieröffnung und/oder die Aufnahmeöffnung nach dem Dosieren der gewünschten, gravimetrisch erfaßten Menge an Schüttgut - insbesondere automatisch - geschlossen wird/werden. Dem Behälter ist folglich eine Wiegeeinrichtung zugeordnet und ist darüber hinaus vorzugsweise eine Steuerung vorgesehen , welche zum Schließen der Dosieröffnung und/oder der Aufnahmeöffnung nach einer voreinstellbaren, mittels der Wiegeeinrichtung gravimetrisch erfaßten Menge an dosiertem Schüttgut ausgebildet ist.

Die Erfindung betrifft schließlich eine mit wenigstens einer solchen Vorrichtung ausgestattete Anlage zum im wesentlichen kontaminationsfreien, gravimetrischen Zusammenführen einzelner Schüttgutkomponenten aus mehreren Vorratsbehältern mit je einer Dosiereinheit mit einer verschließbaren Dosieröffnung in einen Behälter mit einer verschließbaren Aufnahmeöffnung, wobei den Vorratsbehältern je eine Wiegeeinrichtung zugeordnet ist, welche mit dem Behälter zumindest während des Dosierens von Schüttgut aus dem jeweiligen Vorratsbehälter zusammenwirkt, wobei der Behälter unterhalb der Dosiereinheiten der Vorratsbehälter verfahrbar und je nach gewünschter Mischungszusammensetzung nacheinander mit den Dosiereinheiten der entsprechenden Vorratsbehälter lösbar verbindbar ist. Eine solche Anlage kann im wesentlichen entsprechend der Anlage gemäß der eingangs zitierten DE 10 2005 014 930 A1 ausgeführt sein, wobei in den Behälter die in den verschiedenen Vorratsbehältern befindlichen Schüttgüter z.B. entsprechend vorgegebener Rezepturen eingewogen werden.

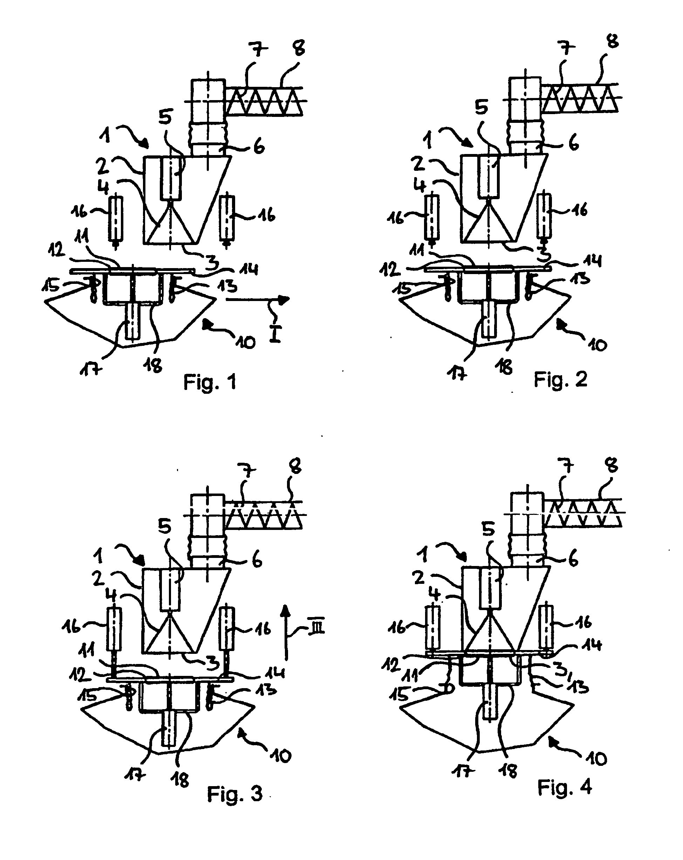

Weitere Vorteile und Merkmale der Erfindung ergeben sich aus der nachfolgenden Beschreibung eines Ausführungsbeispiels unter Bezugnahme auf die Zeichnungen. Dabei zeigen die Fig. 1 bis 11 jeweils eine schematische Schnittansicht einer Ausführungsform einer erfindungsgemäßen Vorrichtung in verschiedenen Stadien eines Dosiervorgangs.

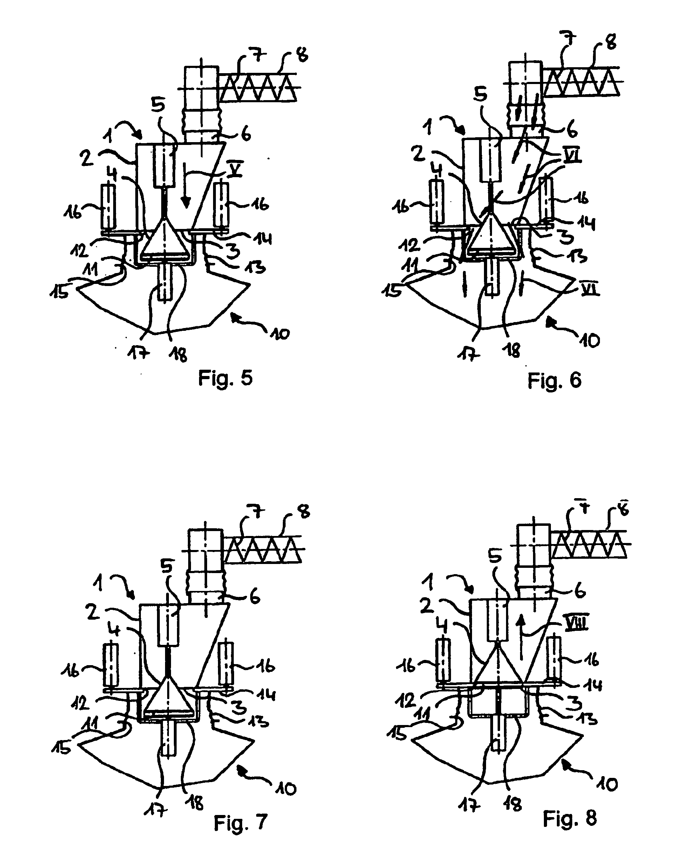

Wie aus den Zeichnungen ersichtlich, umfaßt eine Vorrichtung zur im wesentlichen kontaminationsfreien Überführung von fließfähigem Schüttgut, wie beispielsweise pulver- oder partikelförmigen Komponenten für die Lebensmittel- oder Pharmaindustrie, eine Dosiereinheit 1, welches ein Gehäuse 2 mit einer an dessen Unterseite angeordneten Dosieröffnung 3 umfaßt. Die Dosieröffnung 3 ist mittels eines Verschlußorgans 4 zu öffnen und zu schließen, wobei das Verschlußorgan 4 der Dosiereinheit 1 beim vorliegenden Ausführungsbeispiel von einem etwa kegelförmigen Stempel gebildet ist, welcher mittels einer im oberen Bereich des Gehäuses 2 festgelegten Kolben-/Zylindereinheit 5 zwischen seiner (oberen) Schließstellung (vgl. z.B. Fig. 1) und seiner (unteren) Öffnungsstellung (vgl. z.B. Fig. 5) - hier vertikal - verlagerbar ist. Der Antrieb der Kolben-/Zylindereinheit 5 kann z.B. hydraulisch, pneumatisch oder hydropneumatisch erfolgen, wobei selbstverständlich auch beliebige andersartige Antriebsmittel für das Verschlußorgan 4 vorgesehen sein können, wie Linearantriebe oder dergleichen. An die Oberseite des Gehäuses 2 schließt sich über einen Anschluß 6 ein Dosierorgan 7, z.B. in Form einer Förderschnecke, an, deren rohrförmiges Gehäuse 8 in einen nicht gezeigten Vorratsbehälter mündet, welcher zur Bevorratung des zu dosierenden Schüttgutes dient. Die kegelige, sich nach oben in Richtung des Anschlusses 6 verjüngende Gestalt des Verschlußorgans 4 sowie die Ausgestaltung des Gehäuses 2 derart, daß sich die Dosieröffnung 3 praktisch über die gesamte Unterseite des Gehäuses 2 erstreckt, dient insbesondere zur Vermeidung von Toträumen anläßlich des Dosiervorgangs (Fig. 6). Entsprechendes gilt für die schräge Anordnung der in den Zeichnungen rechten Seitenwand des Gehäuses 2 der Dosiereinheit 1 unterhalb des Anschlusses 6.

Die Vorrichtung umfaßt ferner einen zur Aufnahme von mittels der Dosiereinheit 1 überführtem Schüttgut vorgesehenen Behälter 10, welcher an seiner oberen, der Dosiereinheit 1 zugewandten Seite mit einer mittels eines Verschlußorgans 11 zu öffnenden und zu verschließenden Aufnahmeöffnung 12 ausgestattet ist, welche mit der Dosieröffnung 3 der Dosiereinheit 1 bedarfsweise lösbar verbindbar ist, um Schüttgut mittels der Dosiereinheit 1 in den Behälter 10 zu überführen. Die Aufnahmeöffnung 12 des Behälters 10 ist mittels eines nachgiebigen, im vorliegenden Fall etwa schlauchförmigen Verbindungselement 13 an dem Behälter 10 angeordnet, was bei dem gezeigten Ausführungsbeispiel dadurch bewerkstelligt ist, daß die Aufnahmeöffnung 12 an einem nach Art eines etwa plattenförmigen Deckels ausgestalteten Träger 14 angeordnet ist, welcher mit dem Behälter 10 über das nachgiebige Verbindungselement 13 verbunden ist. Letzteres ist dabei an seinem einen Ende an der dem Behälter 10 zugewandten Unterseite des Trägers 14, die Aufnahmeöffnung 12 umgebend, insbesondere abdichtend, festgelegt, während sein anderes Ende um den Umfang einer der Dosiereinheit 1 zugewandten, oberen Öffnung 15 des Behälters 10, diese insbesondere ebenfalls abdichtend, befestigt ist. Um eine Übertragung von Kräften zwischen der Dosieröffnung 3 der Dosiereinheit 1 und der Aufnahmeöffnung 12 des Behälters 10 verhindern zu können, ist der Träger 14 mit der Aufnahmeöffnung 12 zumindest in einer in den Fig. 4 bis 8 dargestellten Situation, in welcher die Dosieröffnung 3 mit der Aufnahmeöffnung 12 verbunden ist, der Behälter 10 also an die Dosiereinheit 1 "angedockt" hat, in einer solche Relativposition in Bezug auf den Behälter 10 verlagerbar, daß der Träger 14 mit der Aufnahmeöffnung 12 ausschließlich über das nachgiebige Verbindungselement 13 mit dem Behälter 10 - oder genauer: mit dessen Öffnung 15 - in Kontakt steht; Kraftnebenschlüsse zwischen der Dosiereinheit 1 und dem Behälter 10 lassen sich so zumindest während des Dosiervorgangs und insbesondere bereits während des Andockens des Behälters 10 an die Dosiereinheit 1 auf einfache Weise verhindern. Der Träger 14 mit der Aufnahmeöffnung 12 ist hierzu beim gezeigten Ausführungsbeispiel zwischen einer in Fig. 1 bis 3 sowie 9 bis 11 dargestellten Position, in welcher er auf der Öffnung 15 des Behälters 10 aufliegt und die Aufnahmeöffnung 12 mit der Öffnung 15 fluchtet, und einer in Fig. 4 bis 8 wiedergegebenen Position, in welcher der Träger 14 mit der Aufnahmeöffnung 12 demgegenüber in Bezug auf den Behälter 10 angehoben worden ist, - hier etwa vertikal - verlagerbar. Zum Zwecke der Verlagerung des Trägers 14 relativ zu dem Behälter 10 sind im vorliegenden Fall zwei beispielsweise an der Dosiereinheit 1 angeordnete Kolben-/Zylindereinheiten 16 vorgesehen, welche an der Oberseite des Trägers 14 angreifen können, wenn sich der Behälter 10 in seiner unterhalb der Dosiereinheit 1 befindlichen Dosierposition befindet. Der Antrieb der Kolben-/Zylindereinheit 16 kann z.B. hydraulisch, pneumatisch oder hydropneumatisch erfolgen, wobei selbstverständlich auch beliebige andersartige Antriebsmittel vorgesehen sein können, wie Linearantriebe oder dergleichen.

Das Verschlußorgan 11 des Behälters 10 ist im übrigen ähnliche wie das der Dosiereinheit 1 im wesentlichen in Form eines verlagerbaren Stempels gebildet, welches mittels einer weiteren Kolben-/Zylindereinheit 17 zwischen seiner (oberen) Schließstellung (Fig. 1 bis 4 und 8 bis 11) und seiner (unteren) Öffnungsstellung (Fig. 5 bis 7) - hier ebenfalls vertikal - verlagerbar ist. Für den Antrieb der Kolben-/Zylindereinheit 17 gilt entsprechendes wie für die Kolben-/Zylindereinheiten 5 und 16, wobei hier alternativ insbesondere auch eine Fluidfeder vorgesehen sein kann, welche das Verschlußorgan 11 des Behälters 10 in seine Schließstellung (Fig. 1 bis 4 und 8 bis 11) vorbelastet. Beim gezeigten Ausführungsbeispiel ist z.B. der Zylinder der Kolben-/Zylindereinheit 17 an einem - hier in Bezug auf den Träger 14 stationären und an diesem festgelegten - Gestänge 18 befestigt, so daß das Verschlußorgan 11 gemeinsam mit dem Träger 14 in Bezug auf den Behälter 10 - hier vertikal - verlagerbar ist, während das Verschlußorgan 11 zusätzlich durch Verlagern der Kolbenstange des Kolben-/Zylindereinheit 17 zwischen seiner Öffnungs- und Schließstellung bewegbar ist. Das Verschlußorgan 11 des Behälters 10 ist überdies insbesondere mit dem Verschlußorgan 4 der Dosiereinheit 1 koppelbar, wobei letzteres zum Andocken des Behälters 10 an die Dosiereinheit 1 von außen gegen die Außenseite des Verschlußorgans 11 in Kontakt bringbar ist, wobei die Querschnitte beider Verschlußorgane 4, 11 bzw. der Dosier-/Aufnahmeöffnungen 3, 12 vorzugsweise im wesentlichen kongruent sind, um im angedockten Zustand Hinterschneidungen zu vermeiden, welche zu einer ungewollten Anreicherung von Schüttgut führen könnten.

Um für einen Druckausgleich zwischen dem Innern der Dosiereinheit 1 bzw. des Behälters 10 und der Umgebung zu sorgen, kann ferner vorzugsweise ein Druckausgleichselement vorgesehen sein, wobei beim vorliegenden Ausführungsbeispiel das nachgiebige Verbindungselement 13 selbst zugleich als Druckausgleichselement dient, indem es zumindest teilweise oder auch gänzlich aus Filtermaterial, z.B. in Form eines Filtergewebes, gefertigt ist. Die Durchlässigkeit des Filtermaterials sollte hierbei derart gewählt sein, daß auch die kleinste in dem zu dosierenden Schüttgut enthaltene Partikelfraktion das Filtermaterial nicht passieren kann, so daß das Schüttgut nicht mit der Umgebung in Berührung kommen kann. Zugleich ist aufgrund der dichten Verbindung zwischen Dosier- 3 und Aufnahmeöffnung 12 sichergestellt, daß auch keine Spalte oder andere Undichtigkeiten gebildet sind, durch welche das Schüttgut mit der Umgebung in Kontakt treten könnte.

Die vorstehend erläuterte Vorrichtung kann insbesondere Teil einer nicht zeichnerisch dargestellten Anlage zum gravimetrischen Zusammenführen einzelner Schüttgutkomponenten aus mehreren Vorratsbehältern mit je einer solchen Dosiereinheit 1 sein, wie sie als solche beispielsweise aus der eingangs zitierten DE 10 2005 014 930 A1 bekannt ist. Der Behälter 10 dient dann als Mischbehälter und ist zwischen den Vorratsbehältern, z.B. entlang einer Führung, verfahrbar, wobei die Vorratsbehälter mit je einer Dosiereinheit ausgestattet sind. Dem Behälter 10 - bzw. genauer: einem jeden Vorratsbehälter mit einer Dosiereinheit 1 - ist erfindungsgemäß eine ebenfalls nicht zeichnerisch wiedergegebene Wiegeeinrichtung oder Waage zugeordnet , auf welcher der Behälter 10 während des Dosiervorgangs, bei welchem auch in seinem an die jeweilige Dosiereinheit 1 angedockten Zustand erfindungsgemäß Kraftnebenschlüsse mit der Dosiereinheit 1 vermieden werden, aufsteht. Eine Steuerung dient in diesem Fall dazu, die Dosier- 3 und die Aufnahmeöffnung 12 insbesondere gemeinsam zu verschließen, sobald die Waage die jeweils gewünschte Menge an dosiertem Schüttgut gravimetrisch sensiert hat.

Nachstehend ist ein Verfahren zum im wesentlichen kontaminationsfreien Überführen von fließfähigem Schüttgut aus der Dosiereinheit 1 in den Behälter 10 anhand der in Fig. 1 bis 11 wiedergegebenen, verschiedenen Betriebszuständen der Vorrichtung kurz erläutert.

In Fig. 1 befinden sich sowohl das Verschlußorgan 4 der Dosieröffnung 3 der Dosiereinheit 1 als auch das Verschlußorgan 11 der Aufnahmeöffnung 12 des Behälters in ihrer Schließstellung. Der Träger 14 mit der Aufnahmeoffnung liegt auf der oberen Öffnung 15 des Behälters 10 auf. Der Behälter wird gerade in Richtung des Pfeils I seine unterhalb der Dosiereinheit 1 angeordnete Dosierstellung verfahren, welche er in Fig. 2 schließlich erreicht hat. Die Aufnahmeöffnung 12 befindet sich hier in Flucht mit der Dosieröffnung 3.

Wie aus Fig. 3 ersichtlich wird nun der Träger 14 mit der Aufnahmeöffnung 12 des Behälters 10 durch Expandieren der Kolben der z.B. an der Dosiereinheit 1 festgelegten Kolben-/Zylindereinheiten 16 ergriffen und durch Kontrahieren der Kolben dieser Kolben-/Zylindereinheiten 16 in Richtung des Pfeils III auf ein Niveau angehoben, auf welchem der Träger 14 nur noch über das nachgiebige Verbindungselement 13 mit der oberen Öffnung 15 des Behälters 10 verbunden ist (Fig. 4). Das Verschlußorgan 4 der Dosieröffnung 3 der Dosiereinheit 1 kommt dabei außenseitig an dem etwa kongruenten Verschlußorgan 11 der Aufnahmeöffnung 12 des Behälters 10 zur Anlage; die Dosieröffnung 3 ist mit der Aufnahmeöffnung 12 verbunden. Der Behälter 10 hat nun folglich an die Dosiereinheit 1 angedockt, wobei jegliche Kraftnebenschlüsse zwischen der Dosiereinheit 1 und dem Behälter 10 aufgrund der Nachgiebigkeit des Verbindungselementes 13 unterbunden sind.

Wie der Fig. 5 zu entnehmen ist, wird nun die Dosieröffnung 3 gemeinsam mit der Aufnahmeöffnung 12 geöffnet, indem die miteinander gekoppelten Verschlußorgane 4, 11 aus ihrer (oberen) Schließstellung (Fig. 4) in Richtung des Pfeils V in ihre (untere) Öffnungsstellung verlagert werden (Fig. 5). Dies kann einerseits durch synchronisiertes Verfahren der Kolben-/Zylindereinheiten 5, 17 geschehen, wobei es insbesondere auch vorteilhaft sein kann, wenn eine Kolben-/Zylindereinheit - hier die untere 17 des Behälters 10 - von einer in Richtung der Schließstellung - hier nach oben - vorbelasteten Fluidfeder oder einer beliebigen andersartigen, z.B. mechanischen, Feder gebildet ist, welche durch Betätigen der Kolben-/Zylindereinheit 5 entgegen ihrer Vorbelastung komprimiert wird, um das Verschlußorgan 11 des Behälters 10 mit demjenigen 4 der Dosiereinheit 4 in Kontakt zu halten. Nachdem auf diese Weise eine Verbindung zwischen der Dosiereinheit 1 und dem Behälter 10 hergestellt worden ist, wird die Förderschnecke 7 der Dosiereinheit 1 rotiert, wodurch das Schüttgut aus der Dosiereinheit 1 in den Behälter 10 überführt wird, wie es in Fig. 6 durch die Pfeile VI angedeutet ist.

Hat die dem Behälter 10 zugeordnete Waage die gewünschte Menge an dosiertem Schüttgut erfaßt, so wird die Förderschnecke 7 angehalten (Fig. 7) und werden die Verschlußorgane 4, 11 wieder durch Betätigen der entsprechenden Kolben-/Zylindereinheiten 5, 17 in Richtung des Pfeils VIII in ihre (obere) Schließstellung verbracht (Fig. 8). Die in Fig. 8 dargestellte Situation entspricht insoweit der gemäß Fig. 4.

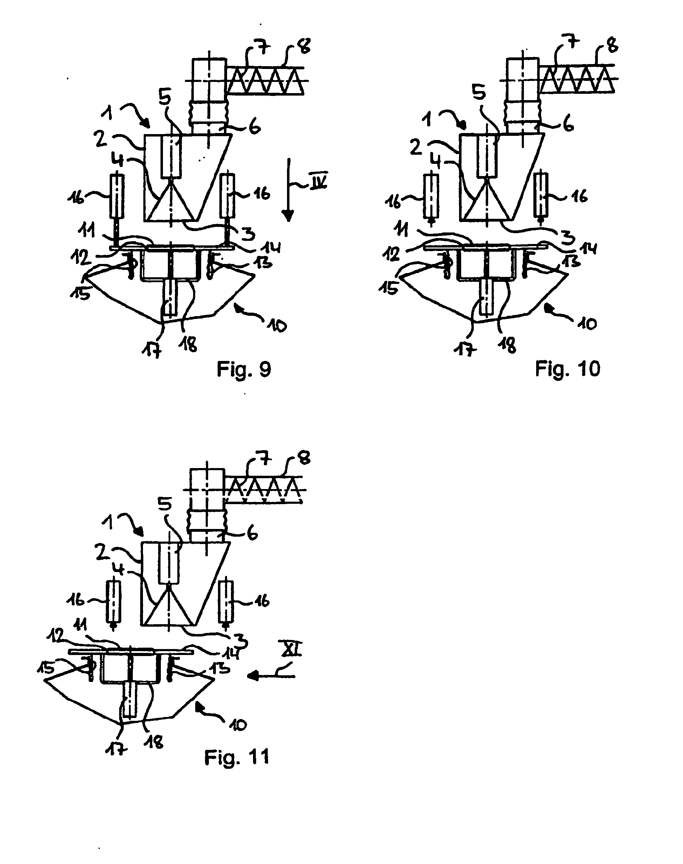

Wie Fig. 9 zu entnehmen ist, wird anschließend der Träger 14 mit der Aufnahmeöffnung 12 mittels der Kolben-/Zylindereinheiten 16 in Richtung des Pfeils IX wieder in seine auf der Öffnung 15 des Behälters 10 aufliegende Position verlagert, wonach die expandierten Kolben dieser Kolben-/Zylindereinheiten 16 den Träger 14 freigeben und in ihre in den Zylinder eingezogene Position zurückfahren (Fig. 10). Der Behälter 10 ist nun folglich wieder gänzlich von der Dosiereinheit 1 abgedockt. Die in Fig. 9 und 10 dargestellten Situationen entsprechen insoweit denjenigen gemäß Fig. 3 und 2.

Der Behälter 10 kann schließlich, wie aus Fig. 11 hervorgeht, in Richtung des Pfeils XI zu der Dosiereinheit (nicht gezeigt) des nächsten Vorratsbehälters oder zu einer Entleerstation verfahren werden, an welcher die entsprechend der gewünschten Rezeptur zusammengestellte Mischung an Schüttgütern dem Behälter 10 entnommen und gegebenenfalls an weitere Verarbeitungsstationen, wie eine Portionierungs-, Verpackungsstation etc., übergeben wird.

## Patentansprüche

1. Verfahren zur im wesentlichen kontaminationsfreien Überführung von fließfähigem Schüttgut aus einer Dosiereinheit (1) mit einer verschließbaren Dosieröffnung (3) in einen Behälter (10) mit einer verschließbaren Aufnahmeöffnung (12), indem die Dosieröffnung (3) der Dosiereinheit (1) mit der Aufnahmeöffnung (12) des Behälters (10) lösbar verbunden wird, die Dosieröffnung (3) und die Aufnahmeöffnung (12) geöffnet werden und das Schüttgut von der Dosiereinheit (1) über deren Dosieröffnung (3) und über die Aufnahmeöffnung (12) des Behälters (10) in diesen überführt wird, **dadurch gekennzeichnet, daß**
- die Dosieröffnung (3) der Dosiereinheit (1) mittels eines nachgiebigen Verbindungselementes an der Dosiereinheit (1) angeordnet wird, um eine Übertragung von Kräften zwischen der Dosieröffnung (3) und der Dosiereinheit (1) verhindern zu können, und/oder
- die Aufnahmeöffnung (12) des Behälters (10) mittels eines nachgiebigen Verbindungselementes (13) an dem Behälter (10) angeordnet wird, um eine Übertragung von Kräften zwischen der Aufnahmeöffnung (12) und dem Behälter (10) verhindern zu können,
wobei die miteinander verbundenen Dosier- (3)/Aufnahmeöffnungen (12) zumindest während des Dosiervorgangs derart relativ zu der Dosiereinheit (1) und/oder zu dem Behälter (10) angeordnet werden, daß eine Übertragung von Kräften zwischen der Dosiereinheit (1) und dem Behälter (10) durch das nachgiebige Verbindungselement (13) verhindert wird; und wobei
der Behälter (10) während des Dosiervorgangs gewogen wird, wobei die Dosieröffnung (3) und/oder die Aufnahmeöffnung (12) nach dem Dosieren der gewünschten, gravimetrisch erfaßten Menge an Schüttgut geschlossen wird/werden.

2. Verfahren nach Anspruch 1, **dadurch gekennzeichnet, daß**
- die Dosieröffnung (3) an einem im wesentlichen senkrecht zur Dosieröffnung (3) verlagerbaren Träger angeordnet und der Träger mit der Dosiereinheit (1) über das nachgiebige Verbindungselement verbunden wird, und/oder
- die Aufnahmeöffnung (12) an einem im wesentlichen senkrecht zur Aufnahmeöffnung (12) verlagerbaren Träger (14) angeordnet und der Träger (14) mit dem Behälter (10) über das nachgiebige Verbindungselement (13) verbunden wird,
wobei der Träger (14) zumindest während des Dosiervorgangs in eine Relativposition in Bezug auf die Dosiereinheit (1) und/oder auf den Behälter (10) verbracht wird, in welcher der Träger (14) ausschließlich über das nachgiebige Verbindungselement (13) mit der Dosiereinheit (1) und/oder mit dem Behälter (10) in Kontakt steht.

3. Verfahren nach Anspruch 1 oder 2, **dadurch gekennzeichnet, daß** die Dosieröffnung (3) und die Aufnahmeöffnung (12) gemeinsam geöffnet werden.

4. Verfahren nach Anspruch 3, **dadurch gekennzeichnet, daß** ein Verschlußorgan (4) der Dosieröffnung (3) mit einem Verschlußorgan (11) der Aufnahmeöffnung (12) gekoppelt wird und die Verschlußorgane (4, 11) gemeinsam in eine Öffnungsposition verbracht werden.

5. Verfahren nach einem der Ansprüche 1 bis 4, **dadurch gekennzeichnet, daß** zumindest während des Dosiervorgangs ein Druckausgleich zwischen dem Innern der Dosiereinheit (1) und/oder des Behälters (10) und der Umgebung hergestellt wird.

6. Verfahren nach Anspruch 5, **dadurch gekennzeichnet, daß** der Druckausgleich mittels eines Filterelementes hergestellt wird, wobei insbesondere ein nachgiebiges Verbindungselement (13) eingesetzt wird, welches zumindest teilweise aus Filtermaterial gefertigt ist.

7. Vorrichtung zur im wesentlichen kontaminationsfreien Überführung von fließfähigem Schüttgut, insbesondere zur Durchführung eines Verfahrens nach einem der vorangehenden Ansprüche, mit einer Dosiereinheit (1) mit einer verschließbaren Dosieröffnung (3) und mit einem Behälter (10) mit einer verschließbaren Aufnahmeöffnung (12), wobei die Dosieröffnung (3) der Dosiereinheit (1) mit der Aufnahmeöffnung (12) des Behälters (10) lösbar verbindbar ist, **dadurch gekennzeichnet, daß**
- die Dosieröffnung (3) der Dosiereinheit (1) mittels eines nachgiebigen Verbindungselementes an der Dosiereinheit (1) angeordnet ist, um eine Übertragung von Kräften zwischen der Dosieröffnung (3) und der Dosiereinheit (1) verhindern zu können, und/oder
- die Aufnahmeöffnung (12) des Behälters (10) mittels eines nachgiebigen Verbindungselementes (13) an dem Behälter (10) angeordnet ist, um eine Übertragung von Kräften zwischen der Aufnahmeöffnung (12) und dem Behälter (10) verhindern zu können,
wobei die miteinander verbundenen Dosier-/ Aufnahmeöffnungen (3, 12) in eine solche Relativposition in Bezug auf die Dosiereinheit (1) und/oder auf den Behälter (10) anordbar sind, daß eine Übertragung von Kräften zwischen der Dosiereinheit (1) und dem Behälter (10) durch das nachgiebige Verbindungselement (13) verhindert wird; und wobei
dem Behälter (10) eine Wiegeeinrichtung zugeordnet ist und die Vorrichtung eine Steuerung umfaßt, welche zum Schließen der Dosieröffnung (3) und/oder der Aufnahmeöffnung (12) nach einer voreinstellbaren, mittels der Wiegeeinrichtung gravimetrisch erfaßten Menge an dosiertem Schüttgut ausgebildet ist.

8. Vorrichtung nach Anspruch 7, **dadurch gekennzeichnet, daß**
- die Dosieröffnung (3) an einem im wesentlichen senkrecht zur Dosieröffnung (3) verlagerbaren Träger angeordnet und der Träger mit der Dosiereinheit (1) über das nachgiebige Verbindungselement verbunden ist, und/oder
- die Aufnahmeöffnung (12) an einem im wesentlichen senkrecht zur Aufnahmeöffnung (12) verlagerbaren Träger (14) angeordnet und der Träger (14) mit dem Behälter (10) über das nachgiebige Verbindungselement (13) verbunden ist,
wobei der Träger (14) in eine Relativposition in Bezug auf die Dosiereinheit (1) und/oder auf den Behälter (10) bringbar ist, in welcher der Träger (14) ausschließlich über das nachgiebige Verbindungselement (13) mit der Dosiereinheit (1) und/oder mit dem Behälter (10) in Kontakt steht.

9. Vorrichtung nach Anspruch 7 oder 8, **dadurch gekennzeichnet, daß** nur entweder die Aufnahmeöffnung (12) des Behälters (10) oder die Dosieröffnung (3) der Dosiereinheit (1) mittels des nachgiebigen Verbindungselementes (13) an dem Behälter (10) oder an der Dosiereinheit (1) angeordnet ist, während die Dosieröffnung (3) oder die Aufnahmeöffnung (12) starr an der Dosiereinheit (1) oder an dem Behälter (10) angeordnet ist, wobei insbesondere die Aufnahmeöffnung (12) des Behälters (10) über das nachgiebige Verbindungselement (13) an dem Behälter (10) angeordnet ist.

10. Vorrichtung nach Anspruch 8 oder 9, **dadurch gekennzeichnet, daß** der Träger (14) mit der über das nachgiebige Verbindungselement (13) mit dem Behälter (10) verbundenen Aufnahmeöffnung auf dem Behälter (10) aufliegt und bedarfsweise auf ein Niveau anhebbar ist, auf welchem der Träger (14) ausschließlich über das nachgiebige Verbindungselement (13) mit dem Behälter (10) in Kontakt steht.

11. Vorrichtung nach einem der Ansprüche 7 bis 10, **dadurch gekennzeichnet, daß** ein Verschlußorgan (4) der Dosieröffnung (3) mit einem Verschlußorgan (11) der Aufnahmeöffnung (12) koppelbar ist und die Verschlußorgane (4, 11) gemeinsam in eine Öffnungsposition bringbar sind.

12. Vorrichtung nach Anspruch 11, **dadurch gekennzeichnet, daß** die Verschlußorgane (4, 11) im wesentlichen in Form von senkrecht zu der Aufnahmeöffnung (12) und/oder zu der Dosieröffnung (3) verlagerbaren Stempeln gebildet sind.

13. Vorrichtung nach einem der Ansprüche 7 bis 12, **dadurch gekennzeichnet, daß** sie ferner ein Druckausgleichselement umfaßt, welches zum Druckausgleich zwischen dem Innern der Dosiereinheit (1) und/oder des Behälters (10) und der Umgebung ausgebildet ist.

14. Vorrichtung nach Anspruch 13, **dadurch gekennzeichnet, daß** das Druckausgleichselement von einem Filterelement gebildet ist, wobei insbesondere das Druckausgleichselement von dem zumindest teilweise aus Filtermaterial gefertigten, nachgiebigen Verbindungselement (13) gebildet ist.

## Claims

1. Method for substantially contamination-free transport of pourable bulk product from a dosing unit (1) having a closable dosing outlet (3) into a container (10) having a closable receiving inlet (12), wherein the dosing outlet (3) of the dosing unit (1) is connected in a detachable manner with the receiving inlet (12) of the container (10), the dosing outlet (3) and the receiving inlet (12) are opened, and the bulk product is transported from the dosing unit (1) through its dosing outlet (3) and through the receiving inlet (12) of the container (10) into the latter, **characterised in that**
- the dosing outlet (3) of the dosing unit (1) is disposed at the dosing unit (1) by means of an elastic joining element to prevent transfer of forces between the dosing outlet (3) and the dosing unit (1), and/or
- the receiving inlet (12) of the container (10) is disposed at the container (10) by means of an elastic joining element (13) to prevent transfer of forces between the receiving inlet (12) and the container (10),
wherein the dosing outlet (3) and the receiving inlet (12), which are connected with each other, are disposed in such a way relative to the dosing unit (1) and/or the container (10), at least during the dosing process, that a transfer of forces between the dosing unit (1) and the container (10) is prevented by the elastic joining element (13), and wherein
the container (10) is weighed during the dosing process, wherein the dosing outlet (3) and/or the receiving inlet (12) are closed after the desired, gravimetrically measured amount of bulk product has been dosed.

2. Method according to claim 1, **characterised in that**
- the dosing outlet (3) is disposed on a carrier which can be shifted substantially perpendicular to the dosing outlet (3) and the carrier is connected with the dosing unit (1) via the elastic joining element, and/or
- the receiving inlet (12) is disposed on a carrier which can be shifted substantially perpendicular to the receiving inlet (12) and the carrier (14) is connected with the container (10) via the elastic joining element (13),
wherein the carrier (14) is brought in a position relative to the dosing unit (1) and/or the container (10), at least during the dosing process, in which the carrier (14) is in contact with the dosing unit (1) and/or the container (10) exclusively via the elastic joining element (13).

3. Method according to claim 1 or 2, **characterised in that** the dosing outlet (3) and the receiving inlet (12) are opened together.

4. Method according to claim 3, **characterised in that** a closure member (4) of the dosing outlet (3) is coupled with a closure member (11) of the receiving inlet (12) and the closure members (4, 11) are brought in an opened position together.

5. Method according to any one of the claims 1 to 4, **characterised in that** pressure compensation is created between the interior of the dosing unit (1) and/or the container (10) and the surroundings, at least during the dosing process.

6. Method according to claim 5, **characterised in that** the pressure compensation is created by means of a filter element, wherein particularly an elastic joining element (13) is used, at least part of which is made of filter material.

7. Device for substantially contamination-free transport of pourable bulk product, in particular for carrying out a method according to any one of the preceding claims, having a dosing unit (1) with a closable dosing outlet (3) and having a container (10) with a closable receiving inlet (12), wherein the dosing outlet (3) of the dosing unit (1) can be connected in a detachable manner with the receiving inlet (12) of the container (10), **characterised in that**
- the dosing outlet (3) of the dosing unit (1) is disposed at the dosing unit (1) by means of an elastic joining element to prevent transfer of forces between the dosing outlet (3) and the dosing unit (1), and/or
- the receiving inlet (12) of the container (10) is disposed at the container (10) by means of an elastic joining element (13) to prevent transfer of forces between the receiving inlet (12) and the container (10),
wherein the dosing outlet (3)/receiving inlet (12), which are connected with each other, can be disposed in such a position relative to the dosing unit (1) and/or the container (10) that a transfer of forces between the dosing unit (1) and the container (10) is prevented by the elastic joining element (13), and wherein the container (10) is associated with a weighing device, wherein the device further comprises a control system structured and disposed to close the dosing outlet (3) and/or the receiving inlet (12) after transporting a presettable amount of dosed bulk product which has been gravimetrically measured by means of the weighing device.

8. Device according to claim 7, **characterised in that**
- the dosing outlet (3) is disposed on a carrier which can be shifted substantially perpendicular to the dosing outlet (3) and the carrier is connected with the dosing unit (1) via the elastic joining element and/or
- the receiving inlet (12) is disposed on a carrier (14) which can be shifted substantially perpendicular to the receiving inlet (12) and the carrier (14) is connected with the container (10) via the elastic joining element (13),
wherein the carrier (14) can be brought in a position relative to the dosing unit (1) and/or the container (10) in which the carrier (14) is in contact with the dosing unit (1) and/or the container (10) exclusively via the elastic joining element (13).

9. Device according to claim 7 or 8, **characterised in that** either only the receiving inlet (12) of the container (10) or the dosing outlet (3) of the dosing unit (1) is disposed at the container (10) or at the dosing unit (1) by means of the elastic joining element (13), while the dosing outlet (3) or the receiving inlet (12) is disposed at the dosing unit (1) or at the container (10) in a rigid manner, wherein particularly the receiving inlet (12) of the container (10) is disposed at the container (10) via the elastic joining element (13).

10. Device according to claim 8 or 9, **characterised in that** the carrier (14) rests on the container (10) with the receiving inlet connected with the container (10) via the elastic joining element (13) and can be lifted as needed to a level where the carrier (14) is exclusively in contact with the container (10) via the elastic joining element (13).

11. Device according to any one of the claims 7 to 10, **characterised in that** a closure member (4) of the dosing outlet (3) can be coupled with a closure member (11) of the receiving inlet (12) and the closure members (4, 11) can be brought together into an opened position.

12. Device according to claim 11, **characterised in that** the closure members (4, 11) are substantially formed by stamps which can be shifted perpendicular to the receiving inlet (12) and/or to the dosing outlet (3).

13. Device according to any one of the claims 7 to 12, **characterised in that** it further comprises a pressure compensation element configured to compensate pressure between the interior of the dosing unit (1) and/or the container (10) and the surroundings.

14. Device according to claim 13, **characterised in that** the pressure compensation element is formed by a filter element, wherein the pressure compensation element is particularly formed by the elastic joining element (13), at least part of which is made of filter material.

## Revendications

1. Procédé de transfert pour l'essentiel sans contamination de marchandises au détail pouvant s'écouler, d'une unité de dosage (1) dotée d'une ouverture de dosage (3) refermable, dans un contenant (10) doté d'une ouverture de logement (12) refermable, l'ouverture de dosage (3) de l'unité de dosage (1) étant reliée de façon amovible à l'ouverture de logement (12) du contenant (10), l'ouverture de dosage (3) et l'ouverture de logement (12) étant ouvertes et les marchandises au détail étant transférées de l'unité de dosage (1) au contenant via l'ouverture de dosage (3) de l'unité de dosage et via l'ouverture de logement (12) du contenant (10), **caractérisé en ce que**
- l'ouverture de dosage (3) de l'unité de dosage (1) est disposée au niveau de l'unité de dosage (1) à l'aide d'un élément de jonction souple, pour permettre d'éviter une transmission de forces entre l'ouverture de dosage (3) et l'unité de dosage (1), et/ou
- l'ouverture de logement (12) du contenant (10) est disposée au niveau du contenant (10) à l'aide d'un élément de jonction (13) souple, pour permettre d'éviter la transmission de forces entre l'ouverture de logement (12) et le contenant (10),
les ouvertures de dosage (3) / de logement (12) reliées entre elles étant disposées, au moins pendant le processus de dosage, de telle sorte par rapport à l'unité de dosage (1) et/ou au contenant (10), qu'une transmission de forces entre l'unité de dosage (1) et le contenant (10) est empêchée par l'élément de jonction (13) souple, et
le contenant (10) étant pesé pendant le processus de dosage, l'ouverture de dosage (3) et/ou l'ouverture de logement (12) étant fermées après le dosage de la
quantité souhaitée, détectée de façon gravimétrique, de marchandises au détail.

2. Procédé selon la revendication 1, **caractérisé en ce que**
- l'ouverture de dosage (3) est disposée au niveau d'un support pouvant être disposé pour l'essentiel perpendiculairement à l'ouverture de dosage (3) et le support est relié à l'unité de dosage (1) par l'intermédiaire de l'élément de jonction souple, et/ou
- l'ouverture de logement (12) est disposée au niveau d'un support (14) pouvant être disposé pour l'essentiel perpendiculairement à l'ouverture de logement (12) et le support (14) est relié au contenant (10) par le biais de l'élément de jonction (13) souple,
le support (14) étant amené, au moins pendant le processus de dosage, dans une position relative par rapport à l'unité de dosage (1) et/ou au contenant (10) dans laquelle le support (14) est en contact avec l'unité de dosage (1) et/ou avec le contenant (10) exclusivement par le biais de l'élément de jonction (13) souple.

3. Procédé selon la revendication 1 ou 2, **caractérisé en ce que** l'ouverture de dosage (3) et l'ouverture de logement (12) sont ouvertes ensemble.

4. Procédé selon la revendication 3, **caractérisé en ce qu'**un organe de fermeture (4) de l'ouverture de dosage (3) est couplé à un organe de fermeture (11) de l'ouverture de logement (12) et que les organes de fermeture (4, 11) sont amenés ensemble dans une position ouverte.

5. Procédé selon l'une quelconque des revendications 1 à 4, **caractérisé en ce qu'**au moins pendant le processus de dosage, un équilibrage de pression est réalisé entre l'intérieur de l'unité de dosage (1) et/ou du contenant (10) et l'environnement.

6. Procédé selon la revendication 5, **caractérisé en ce que** l'équilibrage de pression est réalisé à l'aide d'un élément de filtrage, un élément de jonction (13) souple, fabriqué au moins en partie à partir d'un matériau filtrant, étant notamment inséré.

7. Dispositif de transfert pour l'essentiel sans contamination de marchandises au détail pouvant s'écouler, notamment pour la mise en oeuvre d'un procédé selon l'une quelconque des revendications précédentes, avec une unité de dosage (1) dotée d'une ouverture de dosage (3) refermable et avec un contenant (10) doté d'une ouverture de logement (12) refermable, l'ouverture de dosage (3) de l'unité de dosage (1) pouvant être reliée de façon amovible à l'ouverture de logement (12) du contenant (10), **caractérisé en ce que**
- l'ouverture de dosage (3) de l'unité de dosage (1) est disposée au niveau de l'unité de dosage (1) à l'aide d'un élément de jonction souple, pour permettre d'éviter une transmission de forces entre l'ouverture de dosage (3) et l'unité de dosage (1), et/ou
- l'ouverture de logement (12) du contenant (10) est disposée au niveau du contenant (10) à l'aide d'un élément de jonction (13) souple, pour permettre d'éviter une transmission de forces entre l'ouverture de logement (12) et le contenant (10),
les ouvertures de dosage / logement (3, 12) reliées entre elles étant disposées dans une position relative telle par rapport à l'unité de dosage (1) et/ou au contenant (10) qu'une transmission de forces entre l'unité de dosage (1) et le contenant (10) est empêchée par le biais de l'élément de jonction (13) souple, et un dispositif de pesée étant associé au contenant (10) et le dispositif comprenant une commande configurée pour fermer l'ouverture de dosage (3) et/ou l'ouverture de logement (12) après dosage d'une quantité de marchandises au détail prédéfinie détectée de façon gravimétrique à l'aide du dispositif de pesée.

8. Dispositif selon la revendication 7, **caractérisé en ce que**
- l'ouverture de dosage (3) est disposée au niveau d'un support pouvant être disposé pour l'essentiel perpendiculairement à l'ouverture de dosage (3) et le support est relié à l'unité de dosage (1) par le biais de l'élément de jonction souple, et/ou
- l'ouverture de logement (12) est disposée au niveau d'un support (14) pouvant être disposé pour l'essentiel perpendiculairement à l'ouverture de logement (12) et le support (14) est relié au contenant (10) par le biais de l'élément de jonction (13) souple,
le support (14) pouvant être amené dans une position relative par rapport à l'unité de dosage (1) et/ou au contenant (10) dans laquelle le support (14) est en contact avec l'unité de dosage (1) et/ou avec le contenant (10) exclusivement par le biais de l'élément de jonction (13) souple.

9. Dispositif selon la revendication 7 ou 8, **caractérisé en ce que** seule, au choix, l'ouverture de logement (12) du contenant (10) ou l'ouverture de dosage (3) de l'unité de dosage (1) est disposée au niveau du contenant (10) ou de l'unité de dosage (1) à l'aide de l'élément de jonction (13) souple, tandis que l'ouverture de dosage (3) ou l'ouverture de logement (12) est disposée de façon fixe au niveau de l'unité de dosage (1) ou du contenant (10), l'ouverture de logement (12) du contenant (10) étant notamment disposée au niveau du contenant (10) par le biais de l'élément de jonction (13) souple.

10. Dispositif selon la revendication 8 ou 9, **caractérisé en ce que** le support (14) repose, avec l'ouverture de logement reliée au contenant (10) par le biais de l'élément de jonction (13) souple, sur le contenant (10) et peut être soulevée si besoin à un niveau auquel seul le support (14) est en contact avec le contenant (10) par le biais de l'élément de jonction (13).

11. Dispositif selon l'une quelconque des revendications 7 à 10, **caractérisé en ce qu'**un organe de fermeture (4) de l'ouverture de dosage (3) peut être couplé avec un organe de fermeture (11) de l'ouverture de logement (12) et que les organes de fermeture (4, 11) peuvent être amenés ensemble dans une position ouverte.

12. Dispositif selon la revendication 11, **caractérisé en ce que** les organes de fermeture (4, 11) prennent pour l'essentiel la forme de tampons pouvant être disposés perpendiculairement à l'ouverture de logement (12) et/ou à l'ouverture de dosage (3).

13. Dispositif selon l'une quelconque des revendications 7 à 12, **caractérisé en ce qu'**il comprend en outre un élément d'équilibrage de pression réalisé pour équilibrer la pression entre l'intérieur de l'unité de dosage (1) et/ou du contenant (10) et l'environnement.

14. Dispositif selon la revendication 13, **caractérisé en ce que** l'élément d'équilibrage de pression est constitué par un élément de filtrage, l'élément d'équilibrage de pression étant notamment constitué par l'élément de jonction (13) souple fabriqué à partir d'un matériau filtrant.
